# EUROPEAN PATENT APPLICATION

(11) **EP 4 156 109 A1**
(43) Date of publication of application: **29.03.2023**
(21) Application number: 22196054.5
(22) Date of filing: 16.09.2022
(51) Int. Cl.: G06T 9/00, G06T 13/40

(54) **APPARATUS AND METHOD FOR ESTABLISHING A THREE-DIMENSIONAL CONVERSATIONAL SERVICE**

(30) Priority: 28.09.2021 FI 20216003
(71) Applicant: Nokia Technologies Oy, 02610 Espoo (FI)
(72) Inventor: FASOGBON, Peter Oluwanisola, Tampere (FI); YOU, Yu, Kangasala (FI); AHSAN, Saba, Espoo (FI); AKSU, Emre Baris, Tampere (FI); CURCIO, Igor Danilo Diego, Tampere (FI)
(74) Representative: Nokia EPO representatives

(57) **Abstract**

The embodiments relate to a method comprising establishing a three-dimensional conversational service between a sender and a receiver based on point-cloud and indication on capabilities of supporting three-dimensional point-cloud animation, said indication and said point-cloud having been received from said sender; and receiving media relating to the conversational service and corresponding metadata from the sender, the metadata comprising parameters having dynamically created timed low-level information for re-enacting the animated three-dimensional point-cloud animation on the receiver alongside with the media. In addition, the embodiments relate to an apparatus for implementing the method.

## Description

### Technical Field

The present solution generally relates to conversation system and using three-dimensional representations therein.

### Background

EXtended reality (XR) is a concept that covers all computer-altered reality areas such as Augmented Reality (AR), Mixed Reality (MR) and Virtual Reality (VR). A concept of using 3D pointcloud in realtime XR conversation is gaining lots of momentum and resource of popularity lately. This is mostly due to sudden increase in Augmented Reality (AR) deployment capabilities, Virtual Reality (VR) head-mounted displays available to the consumer market, as well as accessibility and affordability of these devices for Mixed Reality (MR) experiences.

### Summary

The scope of protection sought for various embodiments of the invention is set out by the independent claims. The embodiments and features, if any, described in this specification that do not fall under the scope of the independent claims are to be interpreted as examples useful for understanding
various embodiments of the invention.

Various aspects include a method, an apparatus and a computer readable medium comprising a computer program stored therein, which are characterized by what is stated in the independent claims. Various embodiments are disclosed in the dependent claims.

According to a first aspect, there is provided an apparatus comprising means for establishing a three-dimensional conversational service between a sender and a receiver based on point-cloud and indication on capabilities of supporting three-dimensional point-cloud animation, said indication and said point-cloud having been received from said sender; and means for receiving media relating to the conversational service and corresponding metadata from the sender, the metadata comprising parameters having dynamically created timed low-level information for re-enacting the three-dimensional point-cloud animation on the receiver alongside with the media.

According to a second aspect, there is provided a method comprising establishing a three-dimensional conversational service between a sender and a receiver based on point-cloud and indication on capabilities of supporting three-dimensional point-cloud animation, said indication and said point-cloud having been received from said sender; and receiving media relating to the conversational service and corresponding metadata from the sender, the metadata comprising parameters having dynamically created timed low-level information for re-enacting the animated three-dimensional point-cloud animation on the receiver alongside with the media.

According to a third aspect, there is provided an apparatus comprising at least one processor, memory including computer program code, the memory and the computer program code configured to, with the at least one processor, cause the apparatus to perform at least the following: establish a three-dimensional conversational service between a sender and a receiver based on point-cloud and indication on capabilities of supporting three-dimensional point-cloud animation, said indication and said point-cloud having been received from said sender; and receive media relating to the conversational service and corresponding metadata from the sender, the metadata comprising parameters having dynamically created timed low-level information for re-enacting the three-dimensional point-cloud animation on the receiver alongside with the media.

According to a fourth aspect, there is provided a computer program product comprising computer program code configured to, when executed on at least one processor, cause an apparatus or a system to establish a three-dimensional conversational service between a sender and a receiver based on point-cloud and indication on capabilities of supporting three-dimensional point-cloud animation, said indication and said point-cloud having been received from said sender; and receive media relating to the conversational service and corresponding metadata from the sender, the metadata comprising parameters having dynamically created timed low-level information for re-enacting the three-dimensional point-cloud animation on the receiver alongside with the media.

According to an embodiment, an indication on capability of supporting three-dimensional point cloud and point-cloud animation generation is received from a sender.

According to an embodiment, an indication on capability of supporting three-dimensional point cloud and point-cloud animation generation and an animation rendering is received from the sender.

According to an embodiment, the metadata comprises parameters defining a human object, a keypoint object, a segment object, and a site object.

According to an embodiment, parameters defining the human object comprises information on keypoints and pointcloud.

According to an embodiment, parameters defining keypoint object comprises information for defining pointcloud deformation.

According to an embodiment, parameters defining the site object comprises information on locations of objects.

According to an embodiment, the animation is rendered on a server, and the animation is encoded into a media bitstream to be delivered to the receiver.

According to an embodiment, the metadata comprising parameters having dynamically created timed information is streamed for re-enacting the three-dimensional point-cloud animation on the receiver alongside with the media to the receiver to render the animation.

According to an embodiment, the metadata further comprises information on actions being defined by gesture commands from one or more control devices.

According to an embodiment, the computer program product is embodied on a non-transitory computer readable medium.

### Description of the Drawings

In the following, various embodiments will be described in more detail with reference to the appended drawings, in which
- Fig. 1: shows an example of human keypoint representation for body, face, and hand;
- Fig. 2: shows an example of a point-cloud based 3D Avatar conversational system;
- Fig. 3: shows an example of a 3D Avatar call sequence between a sender, a server, and a receiver;
- Fig. 4: shows an example of a generic metadata interface for point-cloud animation;
- Fig. 5: shows an example of a human object representation;
- Fig. 6: shows an example of how to retrieve mesh data belonging to a particular segment of a human keypoint;
- Fig. 7: shows an example of a keypoint object representation;
- Fig. 8: shows an example of a segment object representation;
- Fig. 9: shows an example of a site object representation;
- Fig. 10: shows an example of ISO/IEC 23090-8 NBMP;
- Fig. 11: shows an example of animation switch between a server and a receiver with NBMP migratable MPE;
- Fig. 12: is a flowchart illustrating a method according to an embodiment; and
- Fig. 13: shows an apparatus according to an embodiment.

### Description of Example Embodiments

The present embodiments are targeted to conversational services, and in particular to metadata for low bandwidth three-dimensional (3D) XR conversational services. It is appreciated that the teachings of the present embodiments can be utilized in other streaming services as well.

The following description and drawings are illustrative and are not to be construed as unnecessarily limiting. The specific details are provided for a thorough understanding of the disclosure. However, in certain instances, well-known or conventional details are not described in order to avoid obscuring the description. References to one or an embodiment in the present disclosure can be, but not necessarily are, reference to the same embodiment and such references mean at least one of the embodiments.

Reference in this specification to "one embodiment" or "an embodiment" means that a particular feature, structure, or characteristic described in connection with the embodiment is included in at least one embodiment of the disclosure.

XR (eXtended Reality) is a concept that covers all computer-altered reality areas such as Augmented Reality (AR), Mixed Reality (MR), and Virtual Reality (VR). In this description term "avatar" refers to 3D (three-dimensional) pointcloud that can be an avatar-like pointcloud of human but also high level detail representation of human and also 3D mesh representation. Real-time 3D Avatar conversation enables a user to transmit a virtual representation of themselves to a receiver's virtual environment or as AR/MR in their physical environment enabling deep immersive experience. This kind of experience enables interaction up to the facial expression, hand gestures, and live commands to impact the receiver's virtual space during live conversation. Much like how audio and video calls have provided a greater deal of realism and immersion to human communications, a 3D avatar would allow for substantially more engaging person-to-person interaction in a virtual environment. Body language can much more closely approach the ability it has in the real world to convey meaning, as movements can be displayed and interpreted more accurately, and virtual or mixed reality environments would create an illusion of a shared physical location. As a result, these makes 3D avatar vital for future conversational system and opening up the possibility of simulating experiences that have not yet been able to be recreated with current technologies and methods, due to the importance of spatial factors that are not able to be captured by 2D (two-dimensional) video.

In preparation for future wide deployment of 3D Avatar conversation system, the design of a proper metadata structure and data format to support conveying and signalling various parameters for 3D avatar are vital. The design of metadata structure will ensure that the system would be able to signal transmitted data, commands and parameters which connect between various offline and online process involving pointclouds, skeleton and various standards compliance under mesh animation and calls. The present embodiments are aimed to provide an exchangable metadata format that will enable low bandwidth system for future 3D avatar-assisted conversation system. The metadata incorporates timed streamed keypoints that represents human body to animate a template pointcloud or avatar at a receiver end of the communication. This process will ensure that 3D pointclouds are not being sent everytime from a sender to a receiver. In addition, the present embodiments cover cloud based media processing, client device based volumetric animation from which streamed metadata will be streamed as part of conversational XR (and related standards, implementation IPRs). Several examples of ISO standards that can support the present embodiments under MPEG SC24 are ISO/IEC 18039:2019: Mixed and augmented reality (MAR) reference model; ISO/IEC 18040:2019 Live actor and entity representation in mixed and augmented reality; (MAR)ISO/IEC 18520:2019 Benchmarking of vision-based spatial registration and tracking methods for mixed and augmented reality; (MAR)ISO/IEC 19774-1:2019 Part 1: Humanoid animation (HAnim) architecture (part 1); ISO/IEC 19774-2:2019 Part 2: Part 2: Humanoid animation (HAnim) motion data animation; ISO/IEC 23488 CD: Object/Environmental Representation for Image-based Rendering in Virtual/Mixed and Augmented Reality; ISO/IEC 23884 DTS Material Property and Parameter Representation for Model based Haptic Simulation of Objects in Virtual, Mixed and Augmented Reality (VR, MAR); and ISO/IEC 18023-1 and AMD: Functional specification ISO/IEC 18023-2: transmission formats.

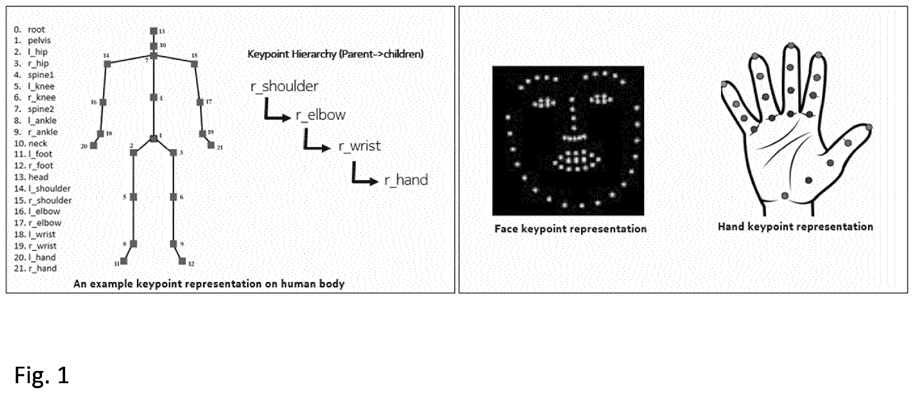

The present embodiments refer to keypoints and joints. Keypoint is a term to refer to human skeletal representation. Keypoint defines a hierarchy connection of parent-child pair of human body joints as shown in Figure 1. By picking a joint denoted as *"r_shoulder"in* the figure, its immediate child *"r_elbow"* can be retrieved, as well as its grandchildren *"r_wrist"* and this cycle goes on until the whole family tree is retrieved. This straightforward representation of joints as keypoints hierarchy allow easy retrieval of information regarding a joint which is useful for various animation framework such as popular skeletal animation based on forward and inverse kinematics. In conclusion, a keypoint can be referred to as a joint with hierarchy definitions while joint is simply a joint without hierarchy formation.

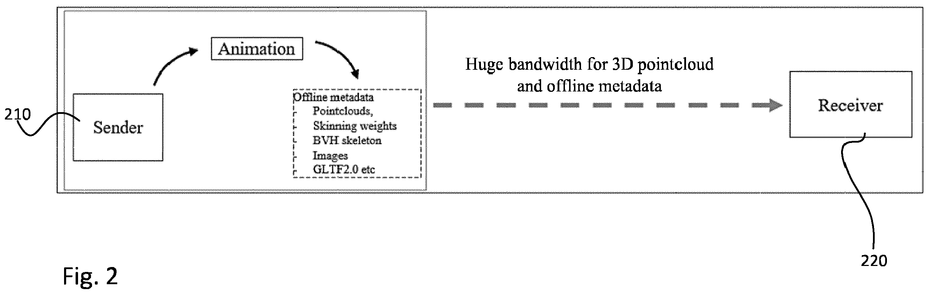

Figure 2 illustrates an example of a simplified 3D avatar conversation system. This process summarizes making a call between a sender 210 and a receiver 220 (1-1 person) scenario. There are a few drawbacks with this simplified 3D avatar call: (i) the capturing process can require extensive hardware to completely capture a full scene, (ii) then large amounts of bandwidth are required to transmit the data generated by 3D video capture hardware at each time during the call. In addition, this call scenario is complicated to manage multiple callers, and the present framework makes it impossible for the receiver to have access to dynamic adaption of animations that can be used to manipulate or define various level of granularity of the 3D avatar available to the receiver.

However, since a 3D avatar can be calculated anywhere or in an earlier time, then it will be more desirable and effective if joints are transmitted from sender side instead of the full 3D avatar at each time. A system at the sender's side records a human actor's keypoints or joints, and the receiver will animate the 3D avatar on their side. For a second scenario whereby a server is involved, the server will animate the avatar and stream the animated model to the receiver. This server can be owned and managed by a mobile operator company or other cloud-based industries. The gradual advancement in technologies ensure that keypoints and joints are easily obtained from visual sensors (e.g., mobile phone, head mounted devices, Xbox Kinect etc.). Sending just keypoints and/or joints for animation helps to hugely save bandwidth and avoid latency problem. This makes this approach ripe for future 3D avatar communications. In spite of slight reduction in accuracy that is absolutely necessary to achieve a low-cost, low bandwidth solution, the animated results on the receiver sides are engaging and pleasing enough.

As the technical challenges of AR/MR/VR in both hardware and software are being overcome, it has become clear that there are needs to create a metadata that is suitable for future standardized delivering and signaling under 3D avatar communication system. The first case in dealing with all these issues is to setup a metadata to handle that and give level of control between what sender and receiver have access to. As a result, the present embodiments provide metadata for supporting low bandwidth reduction through keypoint animation for real-time 3D avatar communication. The proposed metadata is not limited to just realtime animation, but can also offer container for offline animation tasks especially for game scene related animations. It also supports extension for gltf2.0 virtual scene, and skinning operations common for animation tasks in computer graphics. For realtime conversation, the metadata may support all situations described earlier such that point-cloud data may only be sent once to all participants during a conversation session, whereby users' keypoints are streamed as a kind of timed metadata to all users to minimize the bandwidth requirements for high fidelity avatars. The metadata structure is well organized and ensure proper future signalling of various parameters from end-end user that effect the granularity of the keypoints to support variant quality of service (QoS) and quality of experience (QoE) adaptively.

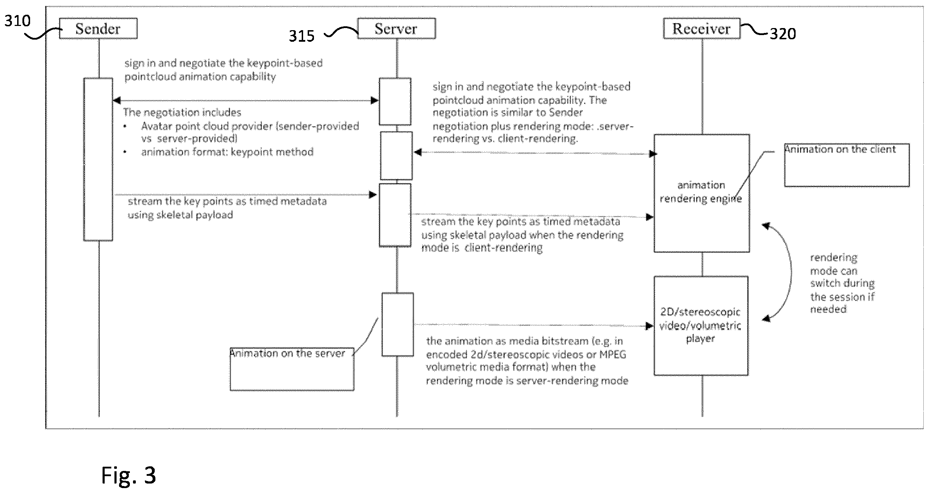

The present embodiments aim to provide a set of metadata to handle interactions, actions, parameters, object associated to 3D Avatar conversation. The proposed metadata enables sending a pointcloud (e.g., an avatar) only once during the initialization process, after which (i.e., during the ongoing call), only timed low level representation of the full human avatar (i.e., pointclouds), such as skeleton, keypoints, joints, silhouettes are needed to re-enact the animation at the receiver end. Figure 3 illustrates an example of a high-level summary of a 3D avatar call. The metadata enables timed animation parameters to be signaled between sender 310 (i.e., a media source) and server 315 and between server 315 and receiver 320 (i.e., a media processing entity) operations. The server 315 can contain a workflow-like framework such as ISO/IEC 23090-8 NBMP (network-based media processing) running in the cloud computing environments that embeds the animation as a service, or a traditional centralized conversational media server such as multipoint control unit (MCU) in video conferencing systems. In addition, as the avatar animation is described as the timed metadata so the design can also be applicable to systems supporting unicasting, multicasting, and broadcasting.

A sender 310 may start by negotiating the animation capability and modes with the server 315 to indicate its capability of supporting 3D point cloud plus point-cloud animation (skeletal metadata) generation. When a receiver 320 is connected to the session, the receiver 320 may follow the same negotiation process but with more information indicating the receiver's 320 rendering capability, in particular, the animation mode preference. The preference can be different requirements for server-side animation or client-side animation.

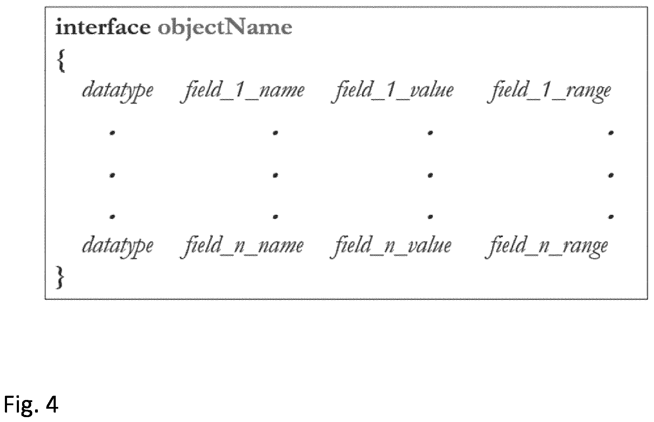

The present embodiments also provide a metadata structure as the basic elements container as a resource to handle commands, activities, pointcloud, time sequence joints needed to animate a pointcloud for realtime conversation. The metadata structure may be signaled with the media being streamed from the sender to the receiver. Other information covered but not limited to are user privacy, environment, viewpoints, visual granularity etc. In the metadata structure, an object interface and name are proposed to specify human avatar (i.e., the avatar). The metadata objects support other class of information connected to the 3D avatar representing the sender that can allow and add better operability and integrability for future extensions as a new object interface. An example of a base interface (i.e., the interface) for the proposed metadata is shown in Figure 4. For example, the object name specifies human avatar as main focus, which has various datatype relation such as commands, one time pointcloud, time sequence keypoints, privacy information, viewports, granularity etc. This will be discussed in more detailed in the following section.

In one processing pipeline, several interfaces representing different parts of an avatar are connected to another by the same geometrical coordinate system defined internally and all are referenced relative to one global origin (0, 0, 0).

The parameter metadata according to present embodiments can be implemented as any type of extension to any metadata formats depending on the data transmission/transport protocols. The parameters may comprise timed information generated dynamically and essential to post-processing or rendering tasks for reacting according to the dynamic information represented by the metadata. For example, by using the interface structure in Figure 4, the system can create dynamic metadata using the interface format for real-time 3D avatar conversation. The system can group parameter metadata for avatar into four parts: 1) human object; 2) keypoint object; 3) segment object; 4) site object. These parts are discussed separately in the following.

### 1) Human interface

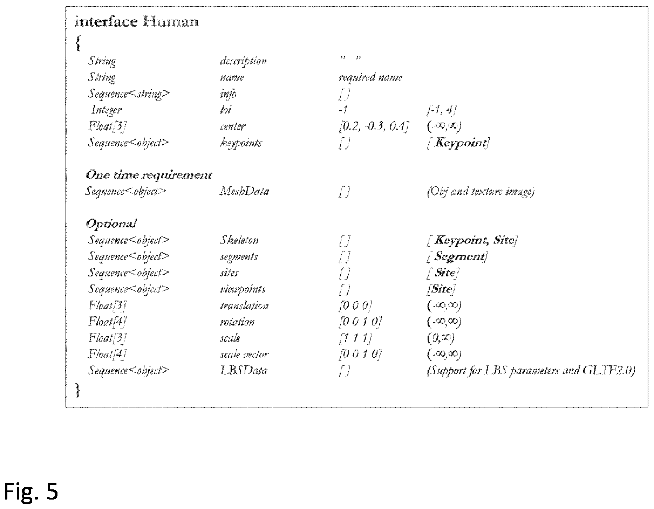

The human object represents a dynamic object "human" in a virtual scene. An example of such is shown in Figure 5. The object defines a container for keypoint and mesh data components that support the conversational animation service. Other fields such as segment and sites are additional services that can be used and support other functionalities. For example, sites can allow customised viewport for camera placement and form of camera placement optimizations.

In the human object representation, the following information is given:
- the field "description" describes information that can be affixed on the object for proper backlogging and retrieval. The field "name", which may be present, and may not have empty string value, stores the name of the person defined by the Human object.
- the field "info" comprises a sequence of strings, each of which is of the form *term=value, creationDate, privacyLevel, callerGPSInfo, callType, usageRestrictions, age, gender, height, weight, mobileOperator, nbCallersSession.* In addition, callType specifies type of call, which can mean "face-only"-type of call, or "full-body" or "upperbody" in device supporting this kind of variation. *NbCallers* can be determined with neural network on server side and/or specified by caller. In addition, additional *term*=*value* pairs may be included as needed for specific application
- the field "loi" describes the Level Of Information available to start the call. For example -1: *only keypoints,* 0: *keypoint and pointcloud, 1: orientation already calculated for keypoints and pointcloud,* etc.
- the field "center" specifies the coordinate value for the human object from a global coordinate system origin (0, 0, 0). This is particularly useful to have a reference in situation where there is more than one human object to link them all to common local coordinate origin.
- the field "keypoints" specify pixel or point coordinates hierarchy. The order in which the keypoints are listed is irrelevant since the names of the joints are stored in the ***Keypoints*** objects themselves.
- the field "MeshData" handles pointcloud related Vertices, normal, texture coordinates, faces (.obj) and Texture UV map, Support VRML, etc.
   ∘ In addition, it incorporates skeletal rig (.bvh) for 3D avatar (e.g. bvh) used in character animation which is also referred to as rigging parameter. This skeletal rig is optional since it can be implicitly inferred from animation system. However, if (.bvh) is not provided, the server side will need to resolve this.
- the field "translation, rotation" specify rotation and translation to global coordinate if required.
- fields "scale, scale vector" specify non-uniform scale of the coordinate system (specifying scale in arbitrary orientations).
- field "skeleton" contains a list of human ***Keypoint*** and ***Site***
   ∘ ***Segment*** are inferred based on *callType,* to determine parts of Keypoints that belong to a particular segment, e.g. "Face segment" will have *I_eyelied* and *r_eyelid.* In addition, **Segment** incorporates **MeshData** that are specific to a particular human body segment.
   ∘ **Site** can be a landmark affixed to a particular joint to enable camera placement for viewport to a particular segment. In addition, it can be the control points where the skeletal model can be split for transmission for the sake of privacy or viewing/viewport/frustum clipping.
- the field "Viewpoint" comprises viewing related information
   ∘ it uses *sites* to generate a location to place the viewpoint camera based on callType
   ∘ the *Viewpoints* field can contain zero or more **Site** object definitions.

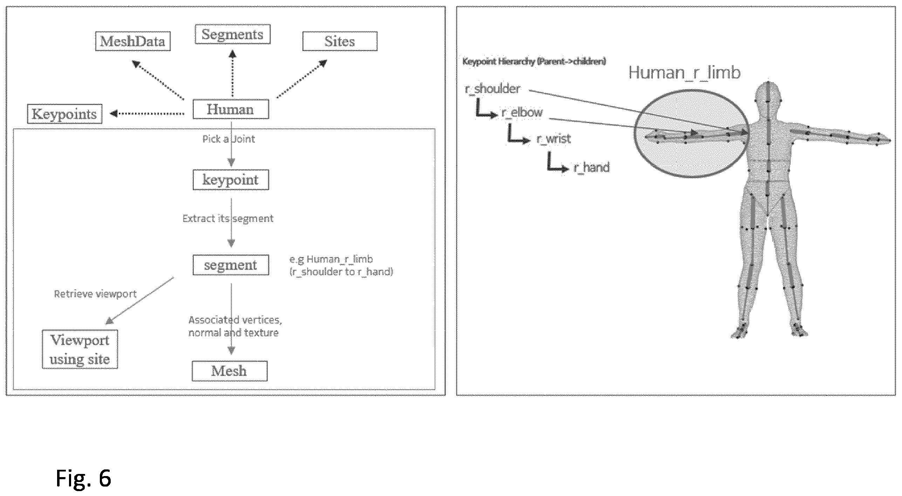

The reference to contained **Keypoint, Segment** and **Site** objects may be used to support inverse kinematics (IK) and other motion tools that animate nodes found within the "skeleton" field. For mesh animation task using Linear Blend Skinning (LBS) through skeletal rigging, mesh data and associated properties can be retrieved as shown in Figure 6. The present embodiments define a hierarchy relationship between pointcloud (meshdata), keypoints, viewports and human body. For example, in Figure 6, the Segment under the keypoint named "shoulder" provide a direct reference to its associated pointcloud structure, belonging to the segment of ***"Human_r_limb".***

In the previous sections, **Human** metadata object has been described, and the fields that allow the functionality of the object to be defined and accessed during conversational service.

### 2) Keypoint interface

The **Keypoint** object is the fundamental building block that represents articulated human body parts which is the main requirement for the pointcloud animation service. Just like in the previous example, the field "center" specifies a translation offset from the root of the overall human body. This value is what animation service needs to calculate mesh deformation. The parameters are *translation, rotation, scale, scale vector.* However, in some cases, when parameters *translation, rotation, scale, scale vector* are already calculated at the sender side, the animation service does not have to calculate them again.

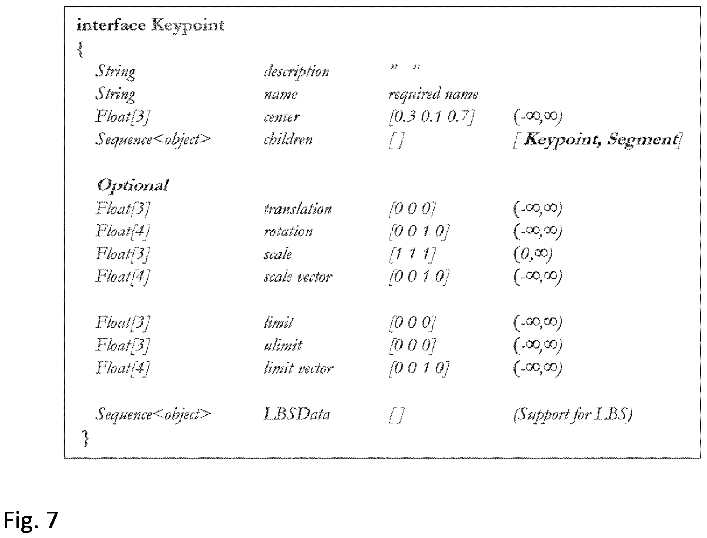

Figure 7 illustrates an example of a **Keypoint** object representation. In the representation, the field "children" specifies the child objects of the Keypoint object in the hierarchy. The field "children" may also contain a single **Segment** object. The *ulimit* and *llimit* fields of the **Keypoint** object specify the upper and lower joint rotation limits. The *ulimitfield* stores the upper (i.e., the maximum) value for rotation around the X, Y, and Z axes. The *llimit* field stores the lower (i.e., the minimum) values for rotation around the X, Y, and Z axes. The animation task will estimate translation, rotation, scale, and scale vector if not provided. The *limitvector* field gives the orientation of the coordinate frame in which the *ulimit* and *llimit* values are to be interpreted. The present embodiments also include an object sequence that can provide extension to skeletal animation required for linear blend skinning methods. These definition with the hierarchy representation can enable inverse kinematics (IK) system and their Degree Of Freedom operations.

Within the local scope of **Human** object, each **Keypoint** object can be referenced by its name alone (e.g., r_shoulder, I_hip, or skullbase). However, when referring to a **Keypoint** object within a larger or global scope, the name of the **Humanoid** object shall be added as a distinguishing prefix. For example, if a **Human** object's *name* field contains the value "peter", the I_hip **Keypoint** object that **Human** object is referred to globally as "peter_I_hip".

### 3) Segment object

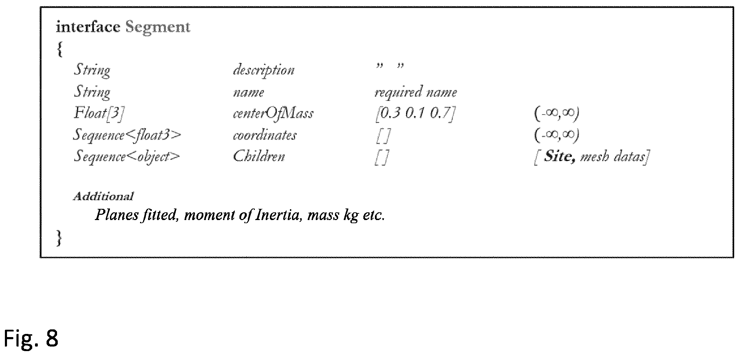

Figure 8 illustrates an example of a **Segment** object representation. **Segment** object is a container for information about a segment of the body. The *name* field may be the only field which shall be defined, all the other fields are optional. However, it shall be noted that those fields may still be required to be part of the interface, even if none of the actual **Segment** objects define values for those fields. A segment's *children* use *site* to define where to place camera for viewing that particular segment *coordinates* define float3 representing object encompassing a segment, and the *centerOfMass* is calculated from the encompassment. Any **Segment** object can also contain zero or more **Site** objects in the *children* field, which allow landmarks to be established with respect to the specific **Segment.** These **Site** objects are moved with the parent **Segment** but are not affected by animation process.

### 4) Site object

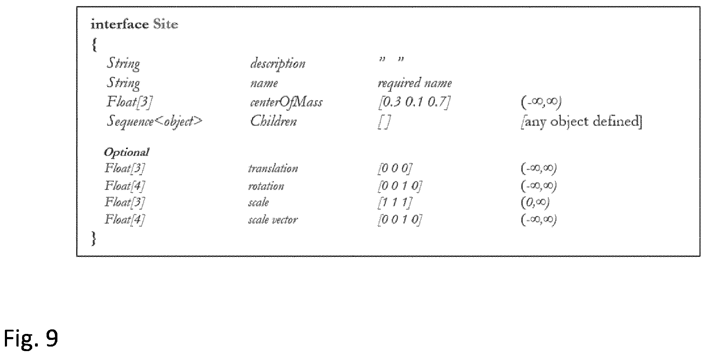

Figure 9 illustrates an example of a site object representation. The **Site** object identifies locations that serve as landmarks for attaching objects with semantics. The *name* field may be the only field which shall be defined, and which shall not have the empty string value. All the other fields are optional. The center of mass can be defined for virtual placement of camera and can be referred to from keypoints and segments. Each **Site** object shall have a *name* field that is used for identifying the object, for example based on names for viewpoint. **Site** objects that are used to define viewpoint locations shall have a "_view" suffix appended. **Site** objects is to define locations for virtual cameras in the reference frame of the **Human** object. Site objects that are defined in this manner are intended to be used as attachment points from which a certain viewing perspective can be seen (such as viewing the face or viewing a profile of the human figure). The **Site** objects defined within this field are affected by the transformations applied to the **Humanoid** object but are not affected by any of the transformations performed on the skeletal hierarchy defined within the *skeleton* field.

According to another embodiment, the "site" interface can be used for build-in privacy control to a segment and reduce bandwidth when the associated keypoints and meshData can be removed from transmission between the sender and the receiver.

The high-level syntax of the parameter metadata is defined in the following table:

| **Name** | **Type** | **Description** | **Required** |
|---|---|---|---|
| description | String | Introductory description | No |
| name | String | Defines the name for global and local identification | Yes |
| info | Sequence of String | Information specific to an object, call type etc | Yes |
| loi | Integer | Level of information available to start the call | Yes |
| keypoint | Sequence of object | Represents hierarchy of human joints | Yes |
| segment | Sequence of object | Define segment containing start and endpoint of joints. This embeds also the mesh data for a particular segment | No |
| site | Sequence of object | Landmark point. Can specify location where a camera should focus on for viewport, incorporate segment | |
| MeshData | Sequence of object | Obj, vrml files etc, skeletal rig (.bvh), texture map image | One time For low bandwidth system where only timely keypoints are sent for animation |
| LBSData | Sequence of object | Data related to Linear blend skinning methods. Also useful for offline animation extension of this work | No |
| skeleton | Sequence of object | Defines hierarchy for keypoints | No |
| children | Sequence of object | Subsequent child of a particular keypoint, it calls all its grandchildren and associated parameters | No |
| center | Float[3] | Center coordinate for an object | |
| CenterOfMass | Float[3] | Center coordinate for an object anchoring other objects | No |
| Translation | Float[3] | Displacement to a global coordinate | No |
| Rotation | Float[4] | Rotation to a global coordinate | No |
| Scale | Float[3] | Scale parameter over the 3 coordinate axis | No |
| Scalevector | Ftoat[3] | Indicating scaling direction | No |

The proposed metadata provides (i) storage container/structure for realtime conversation that uses keypoints for pointcloud animation, and (ii) associated data that can allow its proper functioning from client to server side and vice-versa. Thanks to this, all parameters specific to the full 3D avatar animation process can be signalled in the future. This metadata structure and format will also allow to signal person activity that can improve the system from handheld devices and wearables.

### Additional embodiment

Devices such as occulus quest and Kinect devices can directly provide rotations, translations, scale parameter which can be stored in the metadata and transferred to the receiver. In this embodiment, it means that the server or receiver side animation does not have to recalculate these parameters to animate the mesh. They just directly apply the appropriate animation method such as Linear blend skinning, Quartenion blend skinning or projective skinning.

In addition, rotation and translation information coming from touch controllers can be stored in metadata of present embodiments according to which segment the touch controller is initiated from (e.g., left hand). This information can be rather easily resolved on the receiver end to influence desired animation. The storage in the metadata that defines the call session and types can be used to manage the granularity of the animation in real-time, in addition with specific commands from touch controller. It allows both scenarios whereby the sender or receiver can define the level of detail or granularity of the 3D avatar they want to see. For example, one can decide to see skeletal representation rather than full avatar animation. Subsequently, the facial region/segment can be masked in privacy situations.

The metadata according to present embodiments will allow seamless signals of whether one time pointcloud has been provided or not during the sign-in session and various initiation acknowledgement. This will eventually allow proper real-time decision to be made if replacement pointcloud is required.

Sites interface can allow customized viewport for camera placement and accompany optimizations for better user experience. This is possible, thanks to the segment object that collects accompanying keypoints and mesh data. For example, in an imaginable situation where a call is being made with mobile phone, sites will ensure basis for optimization to accurately place the camera viewport of the receiver to that particular area of the body feasible from the caller seamlessly and in realtime.

### System description

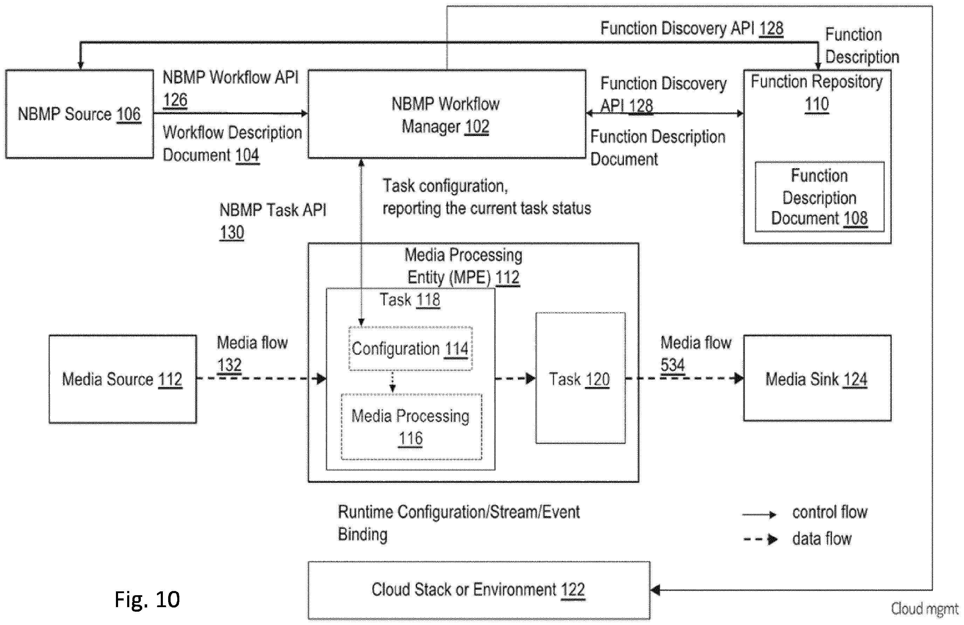

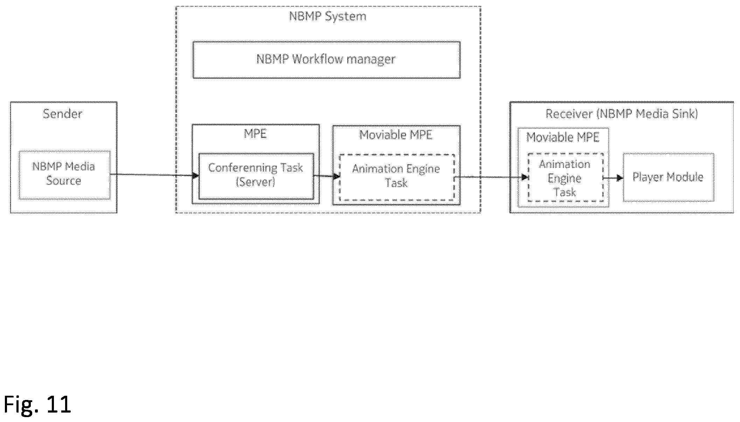

Network-based media processing (NBMP) is a new standard (ISO/IEC 23090-8) in MPEG MPEG-I. An example of such is illustrated in Figure 10. Figure 11 illustrates the architecture of Network-Based Media Processing (NBMP) environment. NBMP enables offloading media processing tasks to the network-based environment like the cloud computing environments. According to an embodiment, the server can be deployed to NBMP environment and the animation rendering functionality can be one NBMP Function deployable in NBMP Function repository. Depending on the capability negotiation, the animation function can be instantiated and run in NBMP MPEs (Media Processing Entities) on the server or on the receivers' devices. NBMP allows migratable MPEs from the Cloud platform to the device environment, and vice versa. In the case of the metadata-assisted animation, the receiver can notify the NBMP Workflow Manager the change of its capabilities and move the animation rendering task to appropriate environment (in the Central Cloud or Edge environments, or on the device).

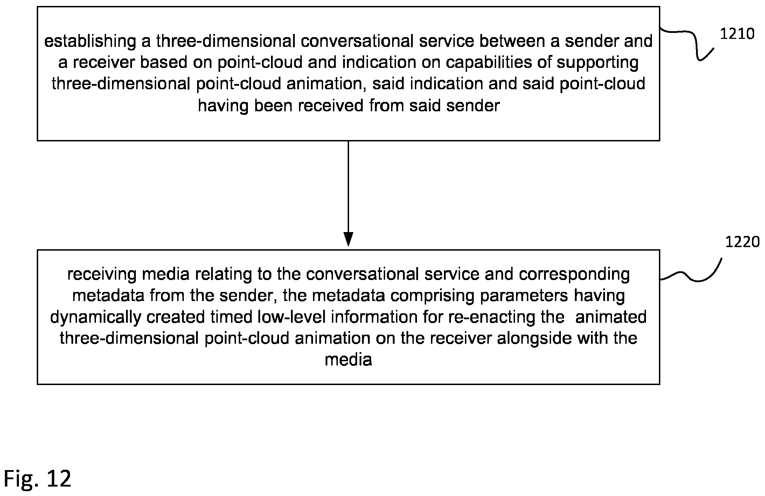

The method according to an embodiment is shown in Figure 12. The method generally comprises establishing 1210 a three-dimensional conversational service between a sender and a receiver based on point-cloud and indication on capabilities of supporting three-dimensional point-cloud animation, said indication and said point-cloud having been received from said sender; and receiving 1220 media relating to the conversational service and corresponding metadata from the sender, the metadata comprising parameters having dynamically created timed low-level information for re-enacting the animated three-dimensional point-cloud animation on the receiver alongside with the media. Each of the steps can be implemented by a respective module of a computer system.

An apparatus according to an embodiment comprises means for establishing a three-dimensional conversational service between a sender and a receiver based on point-cloud and indication on capabilities of supporting three-dimensional point-cloud animation, said indication and said point-cloud having been received from said sender; and means for receiving media relating to the conversational service and corresponding metadata from the sender, the metadata comprising parameters having dynamically created timed low-level information for re-enacting the animated three-dimensional point-cloud animation on the receiver alongside with the media. The means comprises at least one processor, and a memory including a computer program code, wherein the processor may further comprise processor circuitry. The memory and the computer program code are configured to, with the at least one processor, cause the apparatus to perform the method of Figure 12 according to various embodiments.

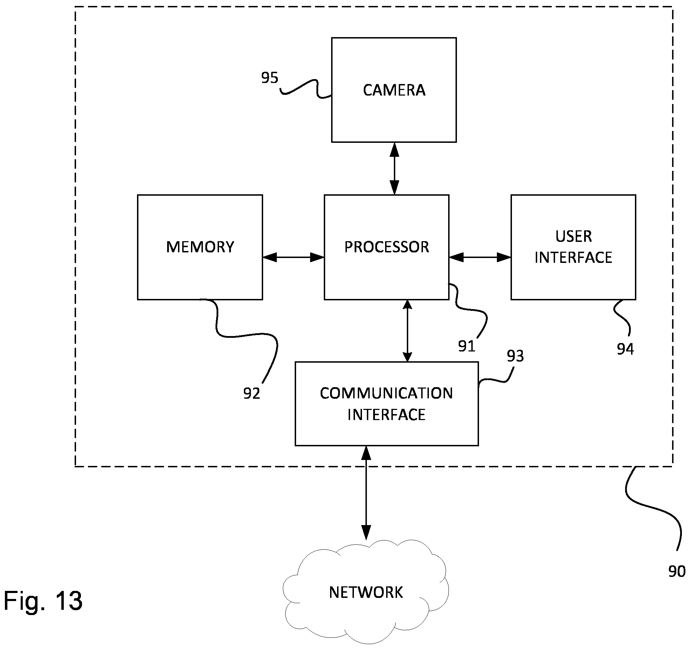

Figure 13 illustrates an example of an apparatus. The apparatus is a user equipment for the purposes of the present embodiments. The apparatus 90 comprises a main processing unit 91, a memory 92, a user interface 94, a communication interface 93. The apparatus according to an embodiment, shown in Figure 10, may also comprise a camera module 95. Alternatively, the apparatus may be configured to receive image and/or video data from an external camera device over a communication network. The memory 92 stores data including computer program code in the apparatus 90. The computer program code is configured to implement the method according to various embodiments by means of various computer modules. The camera module 95 or the communication interface 93 receives data, in the form of images or video stream, to be processed by the processor 91. The communication interface 93 forwards processed data, i.e. the image file, for example to a display of another device, such a virtual reality headset. When the apparatus 90 is a video source comprising the camera module 95, user inputs may be received from the user interface.

The present embodiments provide advantages. For example, the present embodiments enable a low bandwidth system. The proposed metadata is specifically defined for such low bandwidth approach, although it is not restricted to one, and can work in non-low bandwidth systems also.

The various embodiments can be implemented with the help of computer program code that resides in a memory and causes the relevant apparatuses to carry out the method. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of various embodiments.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as, defined in the appended claims.

## Claims

1. An apparatus comprising:
means for establishing a three-dimensional conversational service between a sender and a receiver based on point-cloud and indication on capabilities of supporting three-dimensional point-cloud animation, said indication and said point-cloud having been received from said sender; and
means for receiving media relating to the conversational service and corresponding metadata from the sender, the metadata comprising parameters having dynamically created timed low-level information for re-enacting the three-dimensional point-cloud animation on the receiver alongside with the media.

2. The apparatus according to claim 1, further comprising means for receiving from the sender an indication on capability of supporting three-dimensional point cloud and point-cloud animation generation.

3. The apparatus according to any of claims 1 or 2, further comprising means for receiving from the receiver an indication on capability of supporting three-dimensional point cloud and point-cloud animation generation and an animation rendering.

4. The apparatus according to any of the claims 1 to 3, wherein the metadata comprises parameters defining a human object, a key point object, a segment object, and a site object.

5. The apparatus according to claim 4, wherein parameters defining the human object comprises information on key points and point cloud.

6. The apparatus according to claim 4, wherein parameters defining key point object comprises information for defining point cloud deformation.

7. The apparatus according to claim 4, wherein parameters defining the site object comprises information on locations of objects.

8. The apparatus according to any of the claims 1 to 7, further comprising means for rendering the animation on a server, and for encoding the animation into a media bitstream to be delivered to the receiver.

9. The apparatus according to any of the claims 1 to 7, further comprising means for streaming metadata comprising parameters having dynamically created timed information for re-enacting the three-dimensional point-cloud animation on the receiver alongside with the media to the receiver to render the animation.

10. The apparatus according to any of the claims 1 to 9, wherein the metadata further comprises information on actions being defined by gesture commands from one or more control devices.

11. A method, comprising:
establishing a three-dimensional conversational service between a sender and a receiver based on point-cloud and indication on capabilities of supporting three-dimensional point-cloud animation, said indication and said point-cloud having been received from said sender; and
receiving media relating to the conversational service and corresponding metadata from the sender, the metadata comprising parameters having dynamically created timed low-level information for re-enacting the animated three-dimensional point-cloud animation on the receiver alongside with the media.

12. The method according to claim 11, wherein the metadata comprises parameters defining a human object, a key point object, a segment object, and a site object.

13. The method according to any of claims 11 or 12, further comprising rendering the animation on a server, and encoding the animation into a media bitstream to be delivered to receiver.

14. The method according to any of the claims 11 to 13, further comprising streaming metadata comprising parameters having dynamically created timed information for re-enacting the three-dimensional point-cloud animation on the receiver alongside with the media to the receiver to render the animation.

15. The method according to any of the claims 11 to 14, wherein the metadata further comprises information on actions being defined by gesture commands from one or more control devices.
